# EUROPEAN PATENT APPLICATION

(11) **EP 4 672 575 A1**
(43) Date of publication of application: **31.12.2025**
(21) Application number: 25184128.4
(22) Date of filing: 20.06.2025
(51) Int. Cl.: H02K 21/00, H02K 55/02

(54) **SYNCHRONOUS BRUSHLESS MOTOR WITH AXIAL FLOW, CRYOGENIC PLANT COMPRISING THE MOTOR AND RELATIVE METHOD OF OPERATION OF THE PLANT**

(30) Priority: 25.06.2024 IT 202400014635
(71) Applicant: Energy Technology S.r.l., 40056 Valsamoggia (BO) (IT)
(72) Inventor: ANEMONA, Alessandro, 40056 VALSAMOGGIA (BOLOGNA) (IT); TADDIA, Giuseppe, 40056 VALSAMOGGIA (BOLOGNA) (IT)
(74) Representative: Milli, Simone

(57) **Abstract**

Described is a brushless synchronous motor (1) with axial flow which has at least one rotor defined by a first rotor disc (2), a first plurality of permanent magnets (3) mechanically anchored to the first rotor disc (2), a stator defined by a stator crown (4) comprising a plurality of ferromagnetic cores (5) and a plurality of winding sections and a respective plurality of supporting structures (6) defining containment seats for the ferromagnetic cores (5); the winding sections are wound in the supporting structures (6), each winding section defining a plurality of coils (7) made of superconductive material (HTS coils). The motor (1) further comprises a cryostat (11) configured to define a circulation duct for a cryogenic fluid, the cryostat (11) extends about an outer perimeter of the stator and is configured to touch each coil (7) of the plurality of coils (7). The cryostat (11) has an inlet opening (12) and an outlet opening (13) to allow, respectively, the introduction and extraction of the cryogenic fluid in the circulation duct.

## Description

This invention addresses the technical field of electric motors, in particular that of synchronous brushless motors with an axial flow.

This invention relates to a synchronous brushless motor with axial flow, a cryogenic plant comprising the above-mentioned motor and a method for operation of the cryogenic plant.

The sector of synchronous axial flow motors has been an interesting solution for some years in the industrial sector of automotive, marine propulsion and electric vehicles.

In effect, it is known that the electric machines in the configuration with axial flow and permanent magnets generally provide a greater torque for a given motor displacement than a synchronous radial flow machine since the area of the active magnetic surface is the face of the rotor of the motor rather than the outer diameter.

In effect, that is to say, the surfaces where the conductors and the permanent magnets are located are therefore perpendicular to the axis of the machine.

Whilst in the radial flow machine the torque-diameter relationship is raised to the power of two, in the axial flow machine the relationship is raised to the power of three.

For this reason, it is known that axial flow motors compared with a radial motor of equal power are much more compact and lighter with a greater power density and torque.

Moreover, axial flow electric motors have a different exterior appearance compared to radial flow motors; under equal conditions of torque developed, the axial flow motors have a larger diameter with a smaller width, with reduced overall axial dimensions.

It is known that, whilst in the radial flow machines most of the windings are not active, in the axial flow motors 100% of the windings are active, with considerable benefits from the point of view of the weight/power ratio.

It is also known that if the copper windings and/or the permanent magnets are made using superconducting materials they allow an increase in the density of electric current in the windings and the density of magnetic flow induced at the air gap, keeping zero the losses for energising and eliminating problems due to de-fluxing, that is to say, loss of magnetic flow.

In effect, the superconductors are characterised by a high density of current and by a zero electrical resistance to the passage of a DC current and, therefore, by the absence of losses due to the Joule effect. This results in a reduction in the weight of the windings, a reduction in the cross section and an increase in the efficiency at any speed.

In this context, the technical purpose which forms the basis of this invention is to propose a synchronous brushless motor with axial flow that overcomes the above-mentioned drawbacks.

In particular, the aim of this invention is to provide a brushless electric motor which is highly advanced and environmentally-friendly in terms of energy efficiency.

A further aim of the invention is to provide an extremely compact and lightweight motor.

A further aim of the invention is to provide a motor with a high performance level and thus a greater power and torque density compared to a radial motor of equal power.

The invention also relates to a cryogenic plant for cooling a cryogenic fluid passing into a cryostat.

The invention also relates to a method for operating a cryogenic plant.

The technical purpose indicated and the aims specified are substantially achieved by a synchronous brushless electric motor, a cryogenic plant and a method for operation of a cryogenic plant comprising the technical features described in one or more of the appended claims.

Further features and advantages of the invention are more apparent in the non-limiting description below with reference to preferred but non-exclusive embodiments of brushless electric motor as illustrated in the accompanying drawings, in which:
- Figure 1 shows a perspective view of the motor according to the invention;
- Figure 2 shows a first transversal cross-section of the motor according to the invention;
- Figure 3 shows a perspective view of the rotor discs, with the respective permanent magnets, of the motor illustrated in Figures 1 and 2 and according to the invention;
- Figure 4 shows a schematic view of the stator yoke of the motor according to the invention;
- Figure 5 shows a schematic view of the stator crown, with the superconductive coils (HTS coils) wound, according to the invention;
- Figure 6 shows a schematic view of a superconductive coil (HTS coil) of the motor according to the invention;
- Figure 7 shows a schematic cross-section of the motor according to the invention.

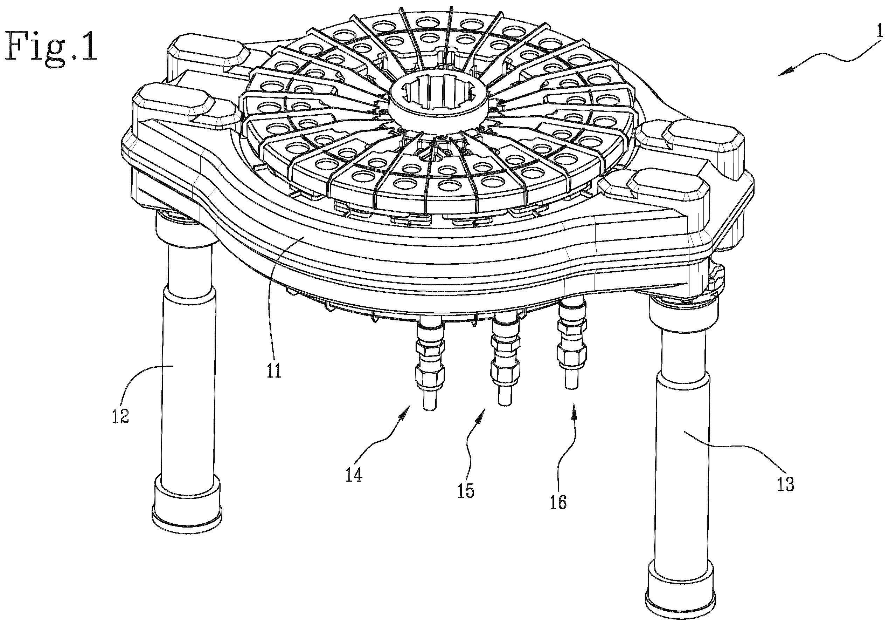

Figure 1 shows the cross-section of a synchronous brushless electric motor with axial flow according to the invention which for simplicity of description will hereafter be referred to as the motor 1.

In particular, as illustrated in Figures 1 to 5, the present invention relates to a motor 1 having at least:
- a rotor defined by a first rotor disc (2);
- a first plurality of permanent magnets 3 anchored (that is, fixed in use) mechanically to the first rotor disc 2; and
- a stator defined by a stator crown 4 comprising a plurality of ferromagnetic cores 5 and a plurality of winding sections and a respective plurality of supporting structures 6 defining containment seats for the ferromagnetic cores 5.

It should be noted that the winding sections are wound on the supporting structures 6.

Each winding section defines a plurality of coils 7 made of superconductive material (HTS - *High Temperature\Superconductor* coils). According to one aspect of the invention, the motor 1 also comprises a second rotor disc 8 and a second plurality of permanent magnets 9 anchored (that is, fixed in use) to the second rotor disc 8.

Both the first rotor disc 2 and the second rotor disc 8 each rest on bearings, fixed between the cryostat and the rotor discs (2, 8).

The permanent magnets 3 and 9 comprise magnets synthesised in rare earth elements, in particular Neodymium-Iron-Boron (N_{d}FₑB) magnets.

The magnets made of N_{d}FₑB alloy are among the most powerful permanent magnets with high resistance to demagnetisation in the market for magnets sintered in rare earths.

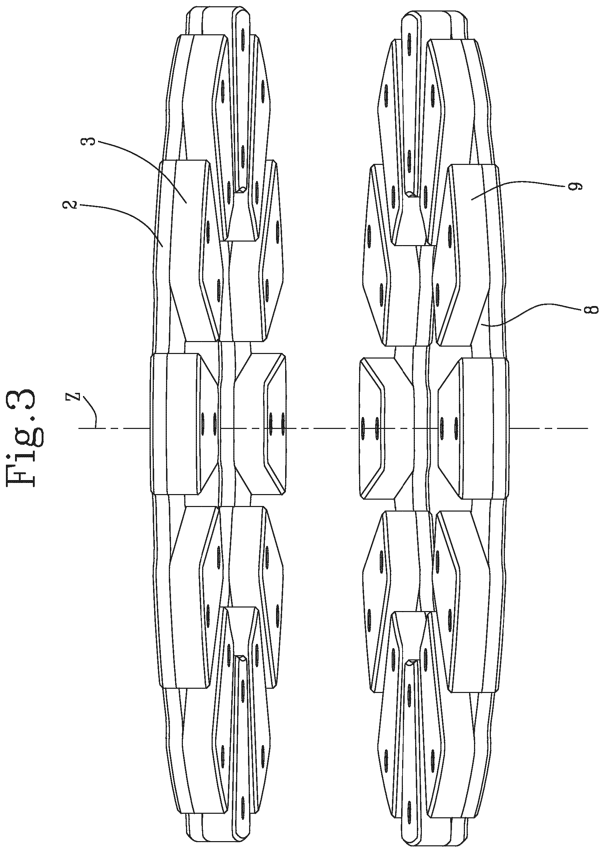

In accordance with an embodiment shown in Figure 3, the first plurality of permanent magnets 3 faces towards the second plurality of permanent magnets 9.

The first plurality of permanent magnets 3 of the first rotor disc 2 and the second plurality of permanent magnets 9 of the second rotor disc 8 may be positioned relative to each other in such a way that a North pole of a permanent magnet of the first rotor disc 2 faces a South pole of a permanent magnet of the second rotor disc 8, and also in such a way that a South pole of a permanent magnet of the first rotor disc 2 faces a North pole of a permanent magnet of the second rotor disc 8.

According to the same embodiment, twelve permanent magnets are arranged on the first rotor disc 2 and on the second rotor disc 8, according to a non-limiting example aspect.

Moreover, both the first rotor disc 2 and the second rotor disc 8 are keyed on the same axis "Z" and rotate at the same speed (Figure 3) and constitute the energising winding (or "field" winding).

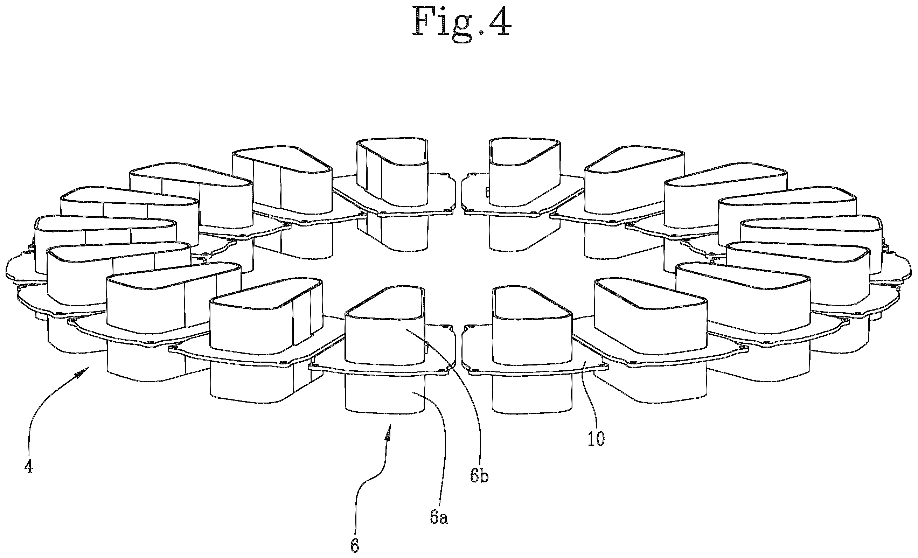

According to another aspect, the stator crown 4 comprises a plurality of supporting structures 6, in each of which is defined a first seat 6a and a second seat 6b (clearly visible in Figure 4).

Each seat 6a, 6b is configured to partly contain a ferromagnetic core 5.

In other words, the supporting structures 6 are defined for partly containing a ferromagnetic core 5 and constitute the stator yoke which is passed through in an axial direction (parallel to the axis "Z") by the force lines of the magnetic field produced by the permanent magnets 3 and 9.

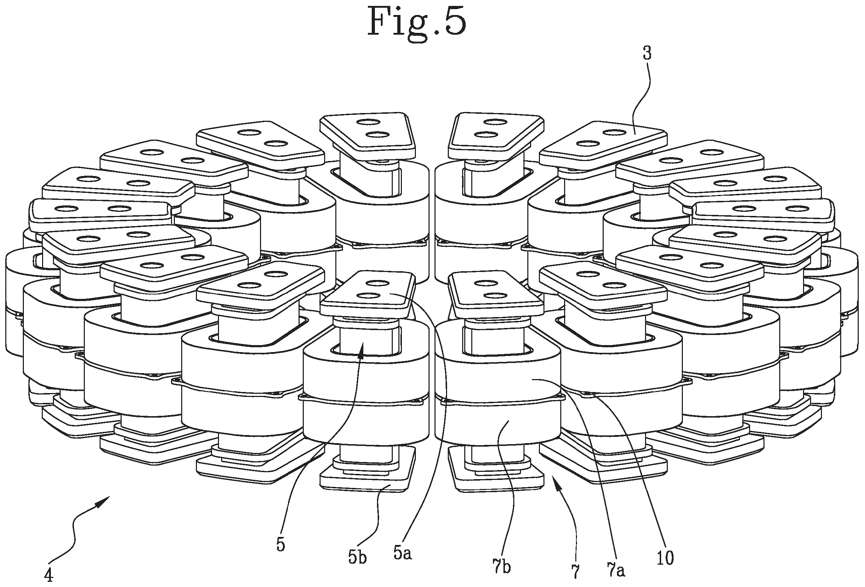

According to an embodiment shown in Figure 5 the stator crown 4 is like a structure with slots and teeth so as to make the motor 1 anisotropic from the magnetic point of view.

According to the same embodiment, the ferromagnetic cores 5 are considered to be the teeth of the stator crown 4.

According to one aspect, the ferromagnetic cores 5 are made from ferromagnetic plates in such a way as to reduce the losses due to the Joule effect due to the currents induced in them.

According to another aspect, the arrangement of the coils 7 has been chosen according to the star of slots theory.

Each ferromagnetic core 5 is inserted inside the first and/or the second seat of the structure 6a and/or 6b.

Each ferromagnetic core 5 also has two ends 5a and 5b (clearly shown in Figure 5) each facing the first plurality of permanent magnets 3 of the respective first rotor disc 2 and/or the second plurality of permanent magnets 9 of the second rotor disc 8.

In other words, inside the first and/or the second seat of the structure 6a and/or 6b there is a core made of ferromagnetic material 5, which is also trapezoidal in shape, which carries at the ends 5a and 5b two plates made of ferromagnetic material 5.

The stator yoke also has a plate-shaped element 10 suitably shaped and preferably made of steel.

The HTS tape of each reel 7 is wound around the plate-shaped metallic element 10, after being electrically isolated, by way of a non-limiting example, by means of Kapton tape or insulating paint applied to the element 10 itself.

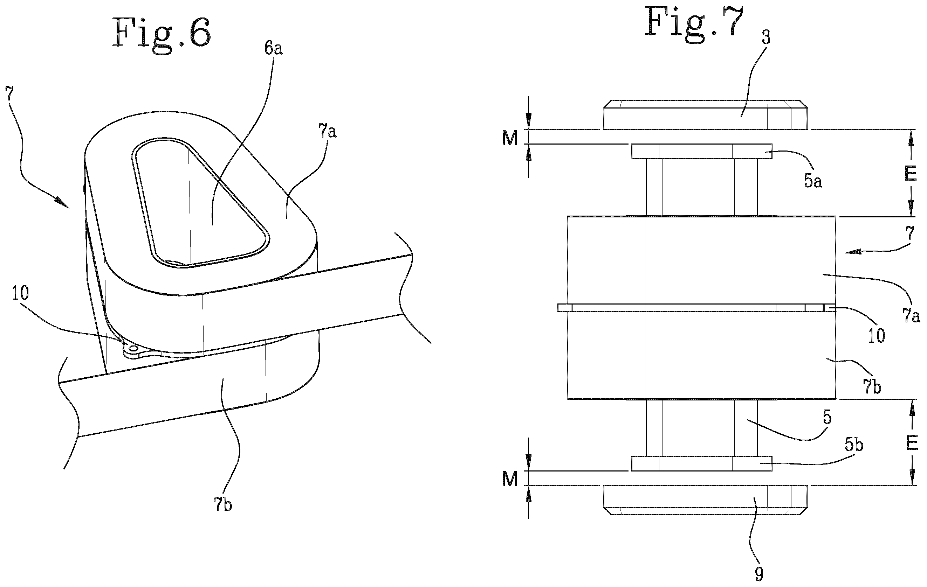

With reference to Figure 6, each coil 7 comprises a first portion 7a and a second portion 7b.

The first portion 7a is inserted in use in the first seat 6a of the supporting structure 6 whilst the second portion 7b is inserted in use in the second seat 6b of the supporting structure 6.

According to one embodiment, each reel 7 is configured to define a double pancake configuration.

As shown in Figures 6 and 7, the first portion 7a of the reel 7 and the second portion 7b of the coil 7 are defined by a single HTS tape, in particular the first portion 7a of the coil 7 is defined by a portion of the HTS tape wound from the outside towards the inside of the coil 7 and the second portion 7b of the coil 7 is defined by a portion of the HTS tape wound from the inside towards the outside of the coil 7.

In other words, an HTS tape is used for wrapping each reel 7 in a double pancake configuration.

The double pancake configuration consists of two pancake-shaped windings, arranged parallel one on top of the other, with the HTS tape passing continuously from one winding section to the other.

Each pancake consists of a single layer of N turns isolated from each other and concentric.

The distinctive feature of this configuration lies in the fact that the first portion 7a of the coil 7 is wound from the outside towards the inside, whilst the second portion 7b of the coil 7 is wound from the inside towards the outside.

In this way, both the ends of the coil 7 are outside and therefore easy to reach.

The motor 1 also comprises a cryostat 11 configured to define a circulation duct for a cryogenic fluid. The cryostat extends about an outer perimeter of the stator 4 and is configured to touch each coil 7 of the plurality of coils 7. In other words, the superconductive coils 7 forming the winding of the motor must be enclosed in a suitable cryostat 11.

Both the first rotor disc 2 and the second rotor disc 8 rest on bearings fixed in the cryostat 11.

The cryostat 11 has an inlet opening 12 and an outlet opening 13 to allow, respectively, the introduction and extraction of the cryogenic fluid in the circulation duct.

It should also be noted that the cryostat 11 is configured to house the coils 7 in the circulation duct.

In other words, the cryostat 11 may be shaped like a vessel. Inside this vessel, a suitable cryogenic fluid, for example, nitrogen, is made to flow to keep the operating temperature (Tₒₚ) of the coils 7 below a critical temperature (T_{c}).

The critical temperature value T_{c} is characteristic of the material, that is, the HTS tape used for each reel.

The critical temperature T_{c} is the temperature after which the superconductive material from which the coils (7) are formed loses its superconductive characteristic and returns to being an insulating ceramic material.

In other words, a *cryocooler* (that is to say, a cryogenic cooler) is provided to provide all the cooling power needed to dispose of, that is, remove, the heat associated with the losses of each coil 7 and keep the operating temperature Tₒₚ at the predetermined value.

In effect, the HTS tape with which the reels 7 are made, when it operates in magnetic field/alternating current (as in the case of a winding of a synchronous machine), it becomes a seat of electrical losses called AC-Loss.

The increase in the operating temperature Tₒₚ results in a reduction in the energy costs for operating the plant.

In fact, under equal conditions of mechanical power of the compressor and therefore of energy consumption, the cooling power of a *cryocooler* is strongly dependent on the temperature at which it is produced.

In order to limit the thermal load associated with alternating current losses (that is, AC-Loss) of the coils 7, and thus dissipate only the heat associated with these losses, according to one aspect of this invention the ferromagnetic core 5 of each coil 7 is positioned outside the cryostat 11.

In that way, although separated by a only few millimetres, the coil 7 and the respective ferromagnetic core 5 will work at different temperatures: 40/50 K and 300K, respectively.

According to another aspect, the cryostat 11 defines a vacuum chamber 40 (inside of which to form the vacuum) so that the temperature difference between the inside and outside environments is kept constant and the exchange of heat between the two environments (inside and outside the chamber) is as a minimum.

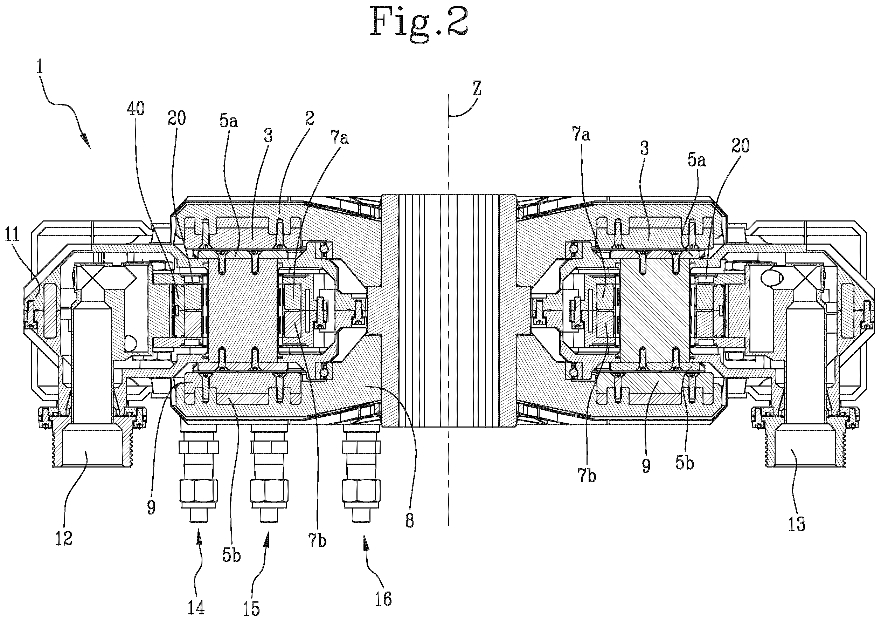

The cryostat 11 therefore forms a supporting structure for the motor 1, a confining chamber for each ferromagnetic core 5 and a vacuum chamber 40 (shown in Figure 2).

In order to form the vacuum inside the vacuum chamber 40, the cryostat 11 has a conduit 20 connected to a valve (which, in turn, in use, is connectable to a vacuum pump for extracting the air from the inside of the vacuum chamber 40, thus forming the vacuum).

According to one aspect, the walls of the cryostat 11 are shiny (to reduce irradiation).

According to another aspect, the only points where there is no vacuum in the cryostat 11 of the motor 1 according to this invention have been made with minimum dimensions.

According to an embodiment shown in Figure 7, since the cores of ferromagnetic material 5 are designed to convey the force lines of the magnetic field and maintain a high value of magnetic flow density linked with the coils 7, despite the presence of the cryostat 11, it is possible to identify a mechanical gap "M" and an electromagnetic gap "E".

The mechanical gap "M" is the space existing between the end of the ferromagnetic core (for example, the upper end 5a) and a permanent magnet (for example of the first plurality of permanent magnets 3).

Preferably, according to one aspect, the mechanical air gap "M" is between 0.2 mm and 1 mm, even more preferably between 0.5 mm and 0.85 mm.

The mechanical gap "M" is measured along the axis "Z" between the plate of ferromagnetic material 5a and the edge of a permanent magnet 3.

The electromagnetic gap "E" is, on the other hand, the space existing between the edge of each coil 7 and the edge of each permanent magnet 3 of the first rotor disc 2 or second rotor disc 8: the average circumference of the electromagnetic gap "E" is taken as a reference for estimating the electrical and magnetic quantities for the purposes of sizing.

In addition, according to the embodiment shown in Figure 7, the mechanical gap "M" has a value less than the electromagnetic gap "E".

According to one aspect of the invention, the cryostat 11 comprises at least one sensor configured for monitoring a magnetic field generated by each coil 7, and/or an operating temperature of each coil 7 and/or a current passing through each coil 7.

The motor 1 also comprises a control unit (not illustrated) to which is associated the at least one sensor and configured in use for regulating a flow of the cryogenic fluid in the circulation duct as a function of a magnetic field, and/or a temperature and/or a current measured by the sensor.

Preferably, the motor 1 comprises at least one valve for regulating the flow of cryogenic fluid in the circulation duct as a function of a magnetic field, and/or a temperature and/or a current measured by the sensor.

According to this aspect, the control unit is connected to the valve to adjust the opening, and thus adjust the flow of the cryogenic fluid in the circulation duct.

According to the invention, a cryogenic plant is also defined comprising a motor 1 and a circuit for introducing the cryogenic fluid into the circulation duct.

In particular, a circuit for introducing cryogenic fluid is connected to the inlet opening 12 and to the outlet opening 13 of the cryostat 11 of the motor 1. The motor 1 is configured in use to convey part of its power to operate the compressor which transfers power to the cryostat 11 in such a way as to generate a flow of the cryogenic fluid between the inlet opening 12 and the outlet opening 13 of the cryostat 11.

In other words, the motor 1 is in use configured for transferring the power produced to the compressor which supplies it to the cryostat 11 for moving the cryogenic fluid inside the circulation duct, so as to keep the coils 7 at their operating temperature Tₒₚ, without exceeding the critical temperature T_{c}.

In effect, the stator also has the three inlet conduits 14, 15 and 16 fixed to it for the electrical cables, in particular one for each of the three stages. For this reason, each coil 7 operates in AC mode is monitored so that magnetic field, temperature and current do not exceed the critical values.

The invention also relates to a method for the operation of a cryogenic plant comprising the steps of supplying the cryogenic plant with cryogenic fluid at a predetermined temperature, conveying the power generated by the motor 1 to the circulation duct to generate a flow of the cryogenic fluid between the inlet opening 12 and the outlet opening 13 of the cryostat 11 and lastly cooling the coils 7 by means of the cryogenic fluid flowing in the circulation duct, in particular from the inlet opening 12 to the outlet opening 13 of the cryostat 11.

It should be noted that, according to the invention, the motor 1 could be applied in various industrial sectors, for example automotive, marine propulsion and electric vehicles.

Moreover, advantageously, the motor 1 may be applied to the compressor of the cryogenic plant, for driving it.

Advantageously, the motor 1 according to the invention makes it possible to overcome the above-mentioned defects of the prior art.

Advantageously, a motor 1 with a very high energy efficiency (around 99%) is provided, which is highly advanced and environmentally-friendly in terms of energy efficiency.

In other words, the motor 1 according to this invention complies with the energy efficiency regulations IE4.

Advantageously, the motor 1 is much more compact and lightweight than that of the prior art; in effect, currently a conventional electric motor with a power of 500 kW weighs 330 kg whilst the motor 1 according to this invention has a weight of 30 kg, an external diameter of approximately 250 mm and a thickness of approximately 100 mm.

In particular, the compactness and lightness of the motor 1 is achieved by optimising the use of the materials and components used to make its internal structure. This feature allows the use of the motor 1 also on the aircraft.

## Claims

1. A brushless motor (1) with axial flow having at least:
- a rotor formed by a first rotor disc (2);
- a first plurality of permanent magnets (3) mechanically anchored to the first rotor disc (2);
- a stator defined by a stator crown (4) comprising a plurality of ferromagnetic cores (5) and a plurality of winding sections and a respective plurality of supporting structures (6) defining containment seats for said ferromagnetic cores (5) and supports for the above-mentioned winding sections; each winding section defines a plurality of coils (7) made of superconductive material (HTS coils);
said motor (1) being **characterised in that** it further comprises a cryostat (11) configured to define a circulation duct for a cryogenic fluid, said cryostat (11) extending about an outer perimeter of said stator and configured to touch each coil (7) of said plurality of coils (7), the cryostat (11) having an inlet opening (12) and an outlet opening (13) to allow, respectively, the introduction and extraction of the cryogenic fluid in the circulation duct.

2. The motor (1) according to claim 1, wherein said cryostat (11) comprises at least one sensor configured for monitoring a magnetic field generated by each coil (7), and/or an operating temperature of each coil (7) and/or a current passing through each coil (7), said motor (1) also comprising a control unit to which the at least one sensor is associated and in use configured for regulating a flow of said cryogenic fluid in the circulation duct as a function of a magnetic field, and/or a temperature and/or a current measured by said sensor.

3. The motor (1) according to claim 2, wherein said control unit is configured to increase said flow of the cryogenic fluid in the circulation duct if said magnetic field, and/or temperature and/or current exceed preset threshold values.

4. The motor (1) according to any one of the preceding claims, wherein the rotor also comprises a second rotor disc (8) and a second plurality of permanent magnets (9) mechanically anchored to the second rotor disc (8).

5. The motor (1) according to any one of the preceding claims and claim 4, wherein said first plurality of permanent magnets (3) faces towards the second plurality of permanent magnets (9).

6. The motor (1) according to claim 5, wherein the permanent magnets of the first rotor disc (2) and the permanent magnets of the second rotor disc (8) are positioned relative to each other in such a way that a North pole of a permanent magnet of the first rotor disc (2) faces a South pole of a permanent magnet of the second rotor disc (8).

7. The motor (1) according to any one of the preceding claims, wherein each supporting structure (6) defines a first seat (6a) and a second seat (6b), each seat configured to partly contain a ferromagnetic core (5); and wherein each coil (7) comprises a first portion (7a) and a second portion (7b), the first portion (7a) is inserted, in use, in the first seat (6a) and the second portion (7b) is inserted, in use, in the second seat (6b).

8. The motor (1) according to any one of the preceding claims and claim 7, wherein the first portion (7a) of the reel (7) and the second portion (7b) of the coil (7) are defined by a single tape, in particular the first portion (7a) of the coil (7) is defined by a portion of the tape wound from the outside towards the inside of the coil (7) and the second portion (7b) of the coil (7) is defined by a portion of the tape wound from the inside towards the outside of the coil (7).

9. The motor (1) according to any one of the preceding claims, wherein each ferromagnetic core (5) is inserted in the first seat (6a) and/or the second seat (6b), each ferromagnetic core (5) also has two ends (5a and 5b) each facing the permanent magnets (3 and/or 9) of the respective first rotor disc (2) and/or second rotor disc (8).

10. The motor (1) according to any one of the preceding claims, wherein each coil (7) is configured to define a double pancake configuration.

11. The motor (1) according to any one of the preceding claims, wherein the permanent magnets (3 and 9) comprise magnets sintered in rare earth elements, in particular neodymium-iron-boron magnets.

12. The motor (1) according to any one of the preceding claims, wherein the cryostat (11) is configured to house, in the circulation duct, the above-mentioned coils (7).

13. The motor (1) according to any one of the preceding claims, wherein the cryostat (11) defines a vacuum chamber (40), has a conduit (20), and a valve.

14. A cryogenic plant comprising a motor (1) according to any one of the preceding claims, and a circuit for introducing cryogenic fluid in the circulation duct, in particular for introducing liquid nitrogen, connected to the inlet opening (12) and to the outlet opening (13) of the cryostat (11) of said motor (1), said motor (1) being configured in use to convey part of its power for supplying the cryostat (11) and the inlet circuit in such a way as to create a flow of the cryogenic fluid between the inlet opening (12) and the outlet opening (13) of said cryostat (11).

15. A method for operating a cryogenic plant according to the preceding claim, comprising the steps of:
- supplying the cryogenic system with cryogenic fluid at a predetermined temperature;
- conveying the power of the motor (1) for supplying the cryostat (11) in such a way as to generate a flow of the cryogenic fluid between the inlet opening (11) and the outlet opening (12) of said cryostat (13);
- cooling said coils (7) using said cryogenic fluid passing in the circulation duct, in particular from the inlet opening (12) to the outlet opening (13) of said cryostat (11).
